Europäisches Patentamt

European Patent Office

Office européen des brevets

(19)

(11) Veröffentlichungsnummer: **0 212 055**
**B1**

(12) **EUROPÄISCHE PATENTSCHRIFT**

(45) Veröffentlichungstag der Patentschrift:
**14.06.89**

(51) Int. Cl.⁴: **B 65 G 21/20**

(21) Anmeldenummer: **86104690.2**

(22) Anmeldetag: **05.04.86**

(54) Vorrichtung zur Schnellverstellung von Führungsbahnen an Transporteuren.

(30) Priorität: **13.04.85 DE 3513231**

(43) Veröffentlichungstag der Anmeldung:
**04.03.87 Patentblatt 87/10**

(45) Bekanntmachung des Hinweises auf die Patenterteilung:
**14.06.89 Patentblatt 89/24**

(84) Benannte Vertragsstaaten:
**AT BE CH DE FR LI NL**

(56) Entgegenhaltungen:
**CH-A- 637 084**
**US-A- 3 527 333**

(73) Patentinhaber: **H&K Verpackungstechnik GmbH,
Niederste Feldweg 29, D-4600 Dortmund 1 (DE)**

(72) Erfinder: **Wiemann, Josef, Karlsruhe Strasse 15,
D-4600 Dortmund 1 (DE)**

## Beschreibung

Die Erfindung bezieht sich auf eine Vorrichtung zur Schnellverstellung von Führungsbahnen an Transporteuren, insbesondere an Flaschen-, Dosen-, Gebindetransporteuren und dgl. mit die einzelnen Bewegungspfade der Förderebene aufteilenden Trennelementen, wobei mit einem Trennelement gegenüber damit seitlich korrespondierender Trennelemente unterschiedliche Führungsbreiten von nebeneinander befindlichen Bewegungspfaden herstellbar sind (aus der CH-A-637 084 bekannt).

Derartige Trennelemente befinden sich insbesondere im Bereich von Verpackungsmaschinen auf Förderern und Fördertischen und dienen dazu, die beispielsweise umzusetzenden bzw. zu verpackenden Flaschen entsprechend dem Kastenformat vorzusortieren und in entsprechende Gruppen bereitzustellen. Dabei befindet sich je nach Format des aufzunehmenden Kastens eine Vielzahl von Bewegungspfaden nebeneinander, die jeweils durch die betreffenden Trennelemente voneinander abgeteilt sind. Sobald nun aufgrund anderen Flaschenmaterials oder anders ausgebildeter Verpackungsbehälter verminderte Abstände zwischen den einzelnen Bewegungspfaden erforderlich sind, müssen die Trennelemente ausgetauscht und durch andere ersetzt werden. Dieses ist insbesondere dann, wenn es sich um langgestreckte und/oder eine Vielzahl von Flaschenpfaden aufweisende Tische handelt, mühevoll und zeitraubend.

Aus der CH-A-637 084 ist bereits eine Vorrichtung zur Verstellung von Führungsbahnen an Transporteuren bekanntgeworden, wobei die Trennelemente an oberhalb der Transportbahn querverlaufenden Stangen gehalten sind. Durch Lösen von Handverstellschrauben kann jedes einzelne Trennelement verschoben und einer gewählten anderen Breite bzw. auf einem veränderten Abstand angepaßt werden. Allerdings müssen zu diesem Zwecke alle einander zugeordneten Handverstellschrauben gelöst und die Trennelemente entsprechend verschoben und ausgerichtet werden. Eine automatische Anpassung aller Trennelemente an einander gleichen Führungsbreiten ist damit nicht möglich.

Um hier Abhilfe zu schaffen, hat sich die Erfindung bei einer Vorrichtung der eingangs genannten Art die Aufgabe gestellt, Trennelemente so auszubilden, daß mit diesen eine äußerst schnelle Verstellung auf gleiche Abstände zwischen den einzelnen Bewegungspfaden vorgenommen werden kann, wobei nur wenige Handgriffe erforderlich sein sollen. Gleichzeitig soll auch eine automatische Verriegelung der einzelnen Trennelemente gegeben sein.

Diese Aufgabe wird gemäß der Erfindung bei einer Vorrichtung der eingangs genannten Art dadurch gelöst, daß mit ein und demselben Trennelement mehrere gleiche Führungsbreiten von Bewegungspfaden bestimmbar sind, wobei die Trennelemente jeweils mehrere abstandsbildende Führungskanten aufweisen, die nacheinander in die Transportebene der Führungsbahnen einfahrbar sind.

Dabei hat es sich als zweckmäßig erwiesen, daß die Trennelemente zwischen den einzelnen Bewegungspfaden der Transportebene angeordnet sind und auf einer unterhalb der Ebene befindlichen Verstelleinrichtung ruhen, mittels welcher die Vertikalverstellung der Trennelemente in Richtung der Transportebene und zurück vornehmbar ist.

Mit der vorgeschlagenen Ausbildung ist eine Umstellung der Bewegungspfade auf unterschiedliche Breiten im Bereich von Sammel- und Aufteiltischen auf einfache und schnelle Weise möglich. Die mit unterschiedlich breiten Führungskanten ausgebildeten Trennelemente können beliebig in ihre spezielle Position verfahren werden und bestimmen auf diese Weise die jeweiligen erforderlichen bzw. gewünschten gleichen Abstände zur Aufteilung der Flaschen oder dgl. Gleichzeitig ist durch die Anordnung dieser Trennelemente innerhalb des Transporteurs bzw. der Förderebene deren einfache und schnelle Arretierung gegeben.

Im nachfolgenden wird die Erfindung anhand eines in der Zeichnung dargestellten Ausführungsbeispiels näher erläutert.

In der Zeichnung zeigt:

Fig. 1 einen einfachen Querschnitt durch den Transporteur,

Fig. 2 die Befestigungselemente der Trennelemente und

Fig. 3 eine mögliche Variante zur Ausbildung der abstandsbildenden Führungskanten der Trennelemente.

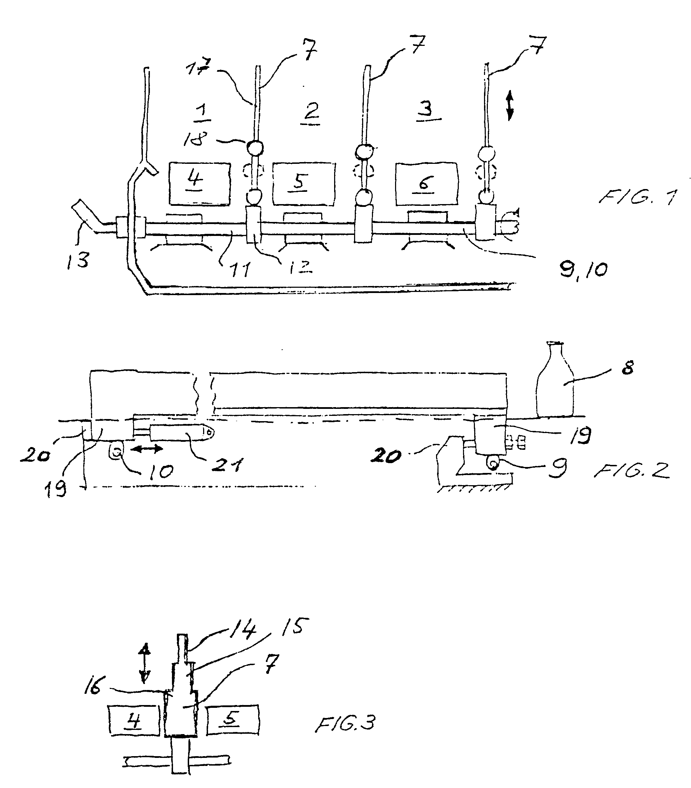

In Fig. 1 ist ein Ausschnitt eines Fördertisches mit mehreren nebeneinander befindlichen Bewegungsbahnen 1, 2, 3 abgebildet. Zwischen diesen einzelnen Bewegungsbahnen 1 bis 3 befinden sich auf Abstand angeordnete Transporteure 4, 5, 6, zwischen denen die einzelnen Trennelemente 7 angeordnet sind und mit ihrem Führungsbereich bis in die Bewegungsbahn der zu transportierenden Gegenstände, die im Ausführungsbeispiel als Flaschen 8 dargestellt sind, ragen.

Wie insbesondere aus Fig. 2 ersichtlich, ruhen die einzelnen Trennelemente 7 auf einer quer zur Förderrichtung verlaufenden Verstelleinrichtung 9 und 10, die beispielsweise aus auf einer Welle 11 befestigten Verstellteilen, beispielsweise Exzentern 12, bestehen. Diese Exzenter können von außen mittels entsprechender Handhabungsmittel 13 verdreht werden, wobei die darauf ruhenden Trennelemente 7 ihre Höhe zur Ebene der Transporteure 4, 5, 6 verändern. Um dabei gleichzeitig auch eine Veränderung der eigentlichen Breiten der Bewegungsbahnen 1, 2, 3 zu bewerkstelligen, weisen die Trennelemente 7 eine Mehrzahl von abstandsbildenden Führungskanten 14, 15, 16 auf. Je nach Höhenverstellung dieser Trennelemente 7 mit ihren Führungskanten 14-16 verändert sich dabei auch automatisch die Breite der nebeneinander verlaufenden Bewegungsbahnen 1-3, so daß mit einer einfachen Verdrehung bzw. einer Höhenveränderung dieser Trennelemente beliebig viele Breiten von Einzelspuren gleichzeitig verändert werden können. Eine spezielle Ausbildung solcher Trennelemente ist in Fig. 3 dargestellt. Bei dem in Fig. 1 dargestellten Ausführungsbeispiel besitzen die Trennelemente 7 lediglich eine zusätzliche abstandsbildende Führungskante 18, die beispielsweise als Rundstange ausgebildet sein kann und darauf einen Blechkörper 17 trägt, der dann die abstandsbildende Einheit für die zweite gewünschte Breite der betreffenden Bewegungspfade bildet.

Gemäß dem in Fig. 2 dargestellten Ausführungsbeispiel weisen die einzelnen Trennelemente 7 nach unter ragende Führungs- und Anschlagflächen 19 auf, die einerseits dazu dienen, die Trennelemente 7 gegen seitliches Verschieben zu sichern und andererseits die Aufgabe haben, diese fest in dem betreffenden Bereiche des Fördertisches zu arretieren. Zu diesem Zwecke ist innerhalb des Maschinenrahmens bzw. Transporteurrahmens ein Anschlagkörper 20 vorgesehen, gegen welchen eine Seite der Trennelemente angelegt und gegebenenfalls auch ausgerichtet werden kann. Auf der gegenüberliegenden Seite ruht das entsprechende Trennelement zunächst auf der Verstelleinrichtung 9, 10, ist dabei gleichzeitig auch gegen seitliches Verschieben arretiert und kann zusätzlich mittels einer Anpreßeinrichtung 21 und anschließendes Verdrehen der jeweiligen Exzenterwelle 11 in die andere Position eine Verschiebung der Trennelemente 7 nach oben oder unten vollzogen werden, wodurch, wie insbesondere Fig. 3 zeigt, durch die veränderte Höhenzuordnung der abstandsbildenden Führungskanten 14, 15, 16 auch eine veränderte Abstandsgröße zwischen den einzelnen Bewegungspfaden 1, 2, 3 zustande kommt. Im Anschluß daran genügt ein Betätigen der Anpreßeinrichtung 21, um die gesamte Fläche des Sammeltisches wieder in Funktion zu bringen.

## Patentansprüche

1. Vorrichtung zur Schnellverstellung von Führungsbahnen an Transporteuren, insbesondere an Flaschen-, Dosen-, Gebindetransporteuren (4, 5, 6) und dgl. mit die einzelnen Bewegungspfade (1, 2, 3) der Förderebene aufteilenden Trennelementen (7), wobei mit einem Trennelement (7) gegenüber damit seitlich korrespondierender Trennelemente (7) unterschiedliche Führungsbreiten von nebeneinander befindlichen Bewegungspfaden (1, 2, 3) herstellbar sind, dadurch gekennzeichnet, daß mit ein und demselben Trennelement (7) mehrere gleiche Führungsbreiten von Bewegungspfaden (1, 2, 3) bestimmbar sind, wobei die Trennelemente (7) jeweils mehrere abstandsbildende Führungskanten (14, 15, 16) aufweisen, die nacheinander in die Transportebene der Führungsbahnen einfahrbar sind.

2. Vorrichtung nach Anspruch 1, dadurch gekennzeichnet, daß die Trennelemente (7) zwischen den einzelnen Bewegungspfaden (1-3) der Transportebene angeordnet sind und auf einer unterhalb dieser Ebene befindlichen Verstelleinrichtung (9, 10) ruhen, mittels welcher eine Vertikalverstellung der Trennelemente (7) in Richtung der Transportebene und zurück vornehmbar ist.

3. Vorrichtung nach Anspruch 1, dadurch gekennzeichnet, daß als Verstelleinrichtung (9, 10) eine quer zur Bewegungsrichtung der Förderer verlaufende Exzenterwelle (11) vorgesehen ist.

4. Vorrichtung nach Anspruch 1, dadurch gekennzeichnet, daß die Trennelemente (7) mit ihren Enden in die Verstelleinrichtung (9, 10) einhängbar, dabei seitlich zentrierbar und mechanisch verriegelbar sind.

5. Vorrichtung nach Anspruch 1, dadurch gekennzeichnet, daß die Trennelemente (7) mittels einer pneumatischen, elektrischen oder dgl. betätigbaren Anpreßeinrichtung (21) arretierbar sind.

## Claims

1. Device for the rapid adjustment of guide paths on conveyors, more especially on bottle, can, barrel conveyors (4, 5, 6) and the like, having separating elements (7) which divide-up the individual paths of movement (1, 2, 3) in the plane of conveyance, wherein different guide widths of adjacent paths of movement (1, 2, 3) can be established with one separating element (7) relative to separating elements (7) which correspond laterally therewith, characterised in that, with one and the same separating element (7), a plurality of identical guide widths for paths of movement (1, 2, 3) can be determined, the separating elements (7) each having a plurality of space-defining guide edges (14, 15, 16) which can be inserted in succession into the plane of conveyance of the guide paths.

2. Device according to claim 1, characterised in that the separating elements (7) are disposed between the individual paths of movement (1-3) of the plane of conveyance and rest on an adjusting mechanism (9, 10), which is situated below this plane and by means of which mechanism a vertical adjustment of the separating elements (7) towards and away from the plane of conveyance can be effected.

3. Device according to claim 1, characterised in that an eccentric shaft (11), which extends transversely relative to the direction of movement of the conveyors, is provided as the adjusting mechanism (9, 10).

4. Device according to claim 1, characterised in that the separating elements (7) can be mounted with their ends on the adjusting mechanism (9, 10) and they can be centred laterally thereby and can be mechanically locked.

5. Device according to claim 1, characterised in that the separating elements (7) can be locked in position by means of a pressure mechanism (21) which may be pneumatic or electrical or otherwise actuatable.

## Revendications

1. Dispositif pour changer ou régler rapidement les rails de guidage de convoyeurs, en particulier de convoyeurs de bouteilles, de boîtes, d'emballages en fûts métalliques (4, 5, 6) et analogues, avec des éléments séparateur (7) séparant les différentes voies de déplacement (1, 2, 3) du plan de manutention, dans lequel il est possible de réaliser différentes largeurs de guidage de voies de déplacement (1, 2, 3) placées les unes à côté des autres, avec un élément de séparation (7) vis-à-vis d'éléments de séparation (7) y correspondant latéralement, caractérisé en ce que, avec un seul et même élément séparateur (7) il est possible de définir plusieurs largeurs de guidage égales des voies de déplacement (1, 2, 3) les éléments séparateur (7) présentant plusieurs bords de giudage distanciateurs (14, 15, 16) qui sont insérables successivement dans le plan de transport des rails de guidage.

2. Dispositif selon la revendication 1, caractérisé en ce que les éléments séparateurs (7) sont disposés entre les différentes voies de déplacement (1-3) du plan de transport et reposent sur un dispositif de réglage (9, 10) placé en dessous de ce plan, grâce auquel un déplacement vertical des éléments séparateurs (7) est réalisable en direction du plan de transport et inversement.

3. Dispositif selon la revendication 1, caractérisé en ce qu'il comprend un arbre d'excentrique (11), transversal par rapport au sens de déplacement des convoyeurs, en tant que dispositif de réglage (9, 10).

4. Dispositif selon la revendication 1, caractérisé en ce que les éléments séparateurs (7) peuvent être accrochés au dispositif de réglage (9, 10) par leurs extrémités, et peuvent être centrés latéralement et bloquées mécaniquement.

5. Dispositif selon la revendication 1, caractérisé en ce que les éléments séparateurs (7) sont bloqués au moyen d'un dispositif de pression actionné pneumatiquement, électriquement ou de manière analogue.

FIG. 1

FIG. 2

FIG.3